# EUROPEAN PATENT APPLICATION

(11) **EP 4 361 094 A1**
(43) Date of publication of application: **01.05.2024**
(21) Application number: 22020506.6
(22) Date of filing: 24.10.2022
(51) Int. Cl.: C01B 3/04, F02C 3/24, F23D 14/00, F23J 7/00, C01B 3/50

(54) **METHOD AND APPARATUS FOR PROCESSING AMMONIA**

(71) Applicant: Linde GmbH, 82049 Pullach (DE)
(72) Inventor: Graville, Stephen Rhys, 82049 Pullach (DE); Hibbitt, Ian, 82049 Pullach (DE)
(74) Representative: Fischer, Werner

(57) **Abstract**

The present invention relates to a method for processing ammonia, wherein a furnace arrangement (100) comprising a furnace zone (110), a heat transfer arrangement (120) arranged downstream of the furnace zone (110), and a heat recovery arrangement (130) arranged downstream of the heat transfer arrangement (120) is used, wherein one or more burners (111) are used to combust a first part of an ammonia feed amount provided by one or more ammonia streams (101) supplied to the one or more burners (111) in the furnace zone (110) using oxygen of one or more oxygen containing streams (102) supplied to the one or more burners (111) and generating a temperature suitable to thermally decompose ammonia, wherein a second part of the ammonia feed amount is thermally decomposed in the furnace zone (110) to form hydrogen and nitrogen, wherein heat is transferred, using the heat transfer arrangement (120), to a heat transfer medium (109) and/or to at least a part of the ammonia and/or at least a part of the oxygen, and wherein at least a part of the hydrogen and the nitrogen formed by the thermal decomposition of the second part of the ammonia feed amount is subjected to at least one of a separation process (210, 220) and purification for direct use of hydrogen as a feedstock or fuel, or for power production using a gas turbine process (230). A corresponding apparatus is also part of the present invention.

## Description

The present invention relates to a method and an apparatus for processing ammonia.

### Background

Ammonia may be an attractive fuel, hydrogen carrier and "storage form" for hydrogen less difficult to handle than compressed or liquefied hydrogen gas. Ammonia is also much more energy efficient to produce than liquid and compressed hydrogen. This is important when looking at the cradle to grave energy efficiency. As summarized in an article by Alexander H. Tullo, "Is ammonia the fuel of the future?," Chemical and Engineering News 2021, Volume 99, Issue 8, ammonia has a higher energy density, at 12.7 MJ/L, than even liquid hydrogen, at 8.5 MJ/L. Liquid hydrogen has to be stored at cryogenic conditions of-253 °C, whereas ammonia can be stored at a much less energy-intensive -33 °C. Furthermore, ammonia, though hazardous to handle, is much less flammable than hydrogen. Due to the wide use of ammonia in agriculture and as a chemical feedstock, an ammonia infrastructure already exists. Worldwide, about 180 million tonnes of ammonia is produced annually, and 20 million tonnes of ammonia is traded in the merchant market, via 120 ports worldwide are already equipped with ammonia terminals.

Ammonia may be used for co-firing or direct use in thermal power plants or gas turbines under development, for example, in order to provide additional energy, but also to provide better control of nitrous oxides formation via Selective Catalytic Reduction (SCR) or Selective Non-Catalytic Reduction (SNCR). For example,

JP 2020-112280 A discloses a furnace comprising a plurality of burners which are adapted to use pulverized coal as a fuel, the coal being introduced into the burners by being entrained by combustion air in a combustion air tube. For co-firing ammonia, an inner tube in the combustion air tube is provided. A similar arrangement is disclosed in JP 2018-096680 A.

Ammonia co-firing for heating boilers is also subject of further patent applications such as WO 2019/189297 A1. Co-Firing of ammonia and pulverized coal is particularly advantageous as the combustion speeds are essentially the same. This means that retrofitting existing systems for co-firing with ammonia may essentially consist in exchanging the burners and power generation in such systems may be maintained by coal even if clean ammonia supply is not yet developed.

Gas turbines may also be operated by co-firing ammonia or using ammonia as the only fuel gas. For example, reference is made to US 2020/018482 A1, US 10,753,276 B2, and US 11,231,176 B2, being only examples of a vast variety of configurations. Ammonia may be used as a "carrier" of voluminous hydrogen, as mentioned.

Besides combustion, ammonia may be catalytically "cracked" or "reformed" to form hydrogen in an ammonia cracker or reformer. The clean hydrogen thus formed may be used directly for many applications, including, but not limited to refineries, chemical production, steel production via the Direct Reduced Iron (DRI) process and hydrogen mobility applications, or to operate a gas turbine, waste heat of which can be used in the ammonia cracker. That is, "hydrogen", "ammonia" and "ammonia cracking" gas turbines may be used.

The advantage of using ammonia in devices as mentioned, and others, include that ammonia is a carbon-free fuel suitable for cracking to hydrogen and decarbonizing refining, chemicals, steel, mobility and heat and power generation.

The present invention has the object of improving processes where ammonia is utilized, including, but not limited to, those mentioned above..

### Summary

In view of the above, the present invention provides a method of processing ammonia and corresponding apparatus comprising the features of the independent claims. Preferred embodiments of the present invention are the subject of the dependent claims and of the description that follows.

Direct heat transfer of hot gases can be used for preheat of ammonia, air and oxygen in embodiments of the present invention. Any residual heat from the process can be used for high, medium and/or low pressure steam production.

Embodiments of the present invention may be utilized for production of hydrogen as a fuel or as a feedstock for chemicals, refining, steel production, hydrogen mobility etc., particularly when purified, rather than for steam formation.

An important aspect or application scenario in this connection is to produce clean ammonia, e.g. "green" and "blue" ammonia, for better transportation (low cost relative to liquid hydrogen or natural gas) overseas from regions of low-cost renewable power to regions of high cost renewable power, and to crack the same to hydrogen for use in the so-called hydrogen economy. Cracked hydrogen has much better application in refining, chemicals, steel and mobility than in power production.

Embodiments of the present invention include that there is a minimum level of oxidation of the ammonia in the reaction furnace (depending on the temperature to crack ammonia and minimize residual level, benefited by maximizing the heat recovery through preheat of the ammonia feed and oxygen or air addition), and a maximum level of dissociation. Hence only a single combustion step and furnace section are required. This will maximize the clean product hydrogen from the waste heat boiler according to embodiments of the present invention.

The present invention is, inter alia, based on the surprising finding that a furnace arrangement partially resembling a furnace arrangement used in Claus desulphurization methods is particularly useful for combusting ammonia, particularly using oxygen-enriched combustion, wherein a substoichiometric oxygen use is particularly suitable to generate further products, from hydrogen and nitrogen, which are produced from decomposition of ammonia. A particularly low nitrous oxides content in a flue gas of such a furnace arrangement may be achieved according to embodiments of the present invention.

For methods and apparatus used in Claus desulphurization methods, reference may be made to expert literature and documents such as EP 3 476 798 A1 by the present applicant, where particular reference may be made to paragraphs [0012] to [0012] which are incorporated herein by reference.

The double combustion technology for Claus desulphurization methods is described elsewhere and is therefore only briefly summarized below. For further details, reference may be made to conference papers such as R. Schendel et al., "A new simple approach to capacity increase of refinery sulphur plants," Annual Meeting of the National Petroleum Refiners Association, 15 to 17 March 1998, and B. Hanson et al., "SURE™ Double Combustion Increases Capacity at the Tesoro Northwest Company Sulfur Plant (Anacortes, WA)," Brimstone Sulfur Conference, 14 to 17 September 1999.

At low levels, oxygen can be simply mixed with combustion air in Claus processes. However, this method of introducing oxygen is normally limited to a maximum overall concentration of 28% oxygen. Therefore, burners may be specifically designed for introducing oxygen directly into the Claus reaction furnace. Even with a burner designed for higher concentrations of oxygen, however, the reaction furnace temperature would exceed the design limits of the refractory. Also, the capability of the existing waste heat boiler may limit oxygen usage, even before temperature limits are encountered. In contrast to known Claus desulphurization methods, embodiments of the present invention include a single combustion.

To limit temperature rise, the combustion reactions are carried out in two stages with intermediate cooling, which are referred to as "first furnace zone," "second furnace zone" and "first heat transfer arrangement" in a Claus process. Acid gases are first subjected to a partial combustion at temperatures well below the safe operating temperature of the refractory, but at temperatures high enough to ensure complete ammonia and hydrocarbon destruction on the first furnace zone.

This first stage of combustion is carried out without meeting the overall stoichiometry requirements, or total oxygen demand. The gases are then cooled the first heat transfer arrangement, prior to entering the second furnace zone where the remainder of the required oxygen is introduced. No burner is provided in the second furnace zone. By design, the gases exiting the first heat transfer arrangement, and entering the second furnace zone, are substantially above the auto-ignition temperature under all normal, and turn down operating conditions. This allows for a low pressure drop system, which is easy to control, and easy to install.

Since the gases entering the second furnace zone are above the auto ignition temperature, even small quantities of oxygen will react completely. A burner is not required, and an oxygen lance may be used to introduce oxygen into the second furnace zone furnace. There is minimal pressure drop through the system because there is or are still only burners in the first furnace zone. Control of oxygen may be straightforward, as oxygen may simply be fed to the first and second reaction furnace zones at a constant ratio between the two furnace zones.

Be it noted that, according to embodiments of the present invention, a furnace that may resemble the first furnace zone of a Claus furnace as just described may be used. However, a furnace used according to embodiments of the present invention is generally not present, or not operated in the way it is in a Claus process. However, a heat recovery downstream the "first" (or essentially only) furnace or furnace zone is performed. That is, embodiments of the present invention include providing a gas mixture which would, in a Claus arrangement, be further converted by oxygen in a second furnace zone. In contrast, rather, such a gas mixture may be used or separated in other ways according to embodiments of the invention, which now will be described.

Herein, a method for processing ammonia is provided, wherein a furnace arrangement comprising a furnace zone, a heat transfer arrangement arranged downstream of the furnace zone, and a heat recovery arrangement arranged downstream of the heat transfer arrangement is used. One or more burners are used to combust a first part of an ammonia feed amount provided by one or more ammonia streams supplied to the one or more burners in the furnace zone using oxygen of one or more oxygen containing streams supplied to the one or more burners and generating a temperature suitable to thermally decompose ammonia. A a second part of the ammonia feed amount is therefore thermally decomposed in the furnace zone to form hydrogen and nitrogen, and heat is transferred, using the heat transfer arrangement, to a heat transfer medium and/or (from the heat transfer medium or directly) to at least a part of the ammonia and/or at least a part of the oxygen. The term "heat transfer arrangement" shall include any means suitable for transferring heat, whether or not using a heat transfer medium. Particularly at the temperatures mentioned below, heat may be transferred directly, e.g. in a heat exchanger, to ammonia and/or oxygen without a heat transfer medium. At least a part of the hydrogen and the nitrogen formed by the thermal decomposition of the second part of the ammonia feed amount is subjected to at least one of a separation process and a gas turbine process.

The term "oxygen containing stream" as used herein may refer to a stream of pure or essentially pure (e.g. "technical") oxygen or essentially consisting of oxygen, but also to air or oxygen enriched air with an oxygen content higher that that of atmospheric air. At certain places hereinbelow, shorthand reference is made to an "oxygen stream" instead of an "oxygen containing stream" without any intent to limit the scope to pure or essentially pure oxygen.

By the indication "essentially" it is to be understood here in particular that in addition to the obligatory constituents, further constituents are permitted in a certain composition, stream, etc., provided that the essential features of the composition, stream, etc. are not significantly changed by these. For example, a stream "essentially consisting of oxygen" is suitable for oxidation purposes without any minor components or trace gases significantly affecting it quantitatively or reaction-wise. A mixture "essentially" containing or consisting of one or more components may, in particular, have these components at more than 95, 99, 99.9 or 99.99% in total or as individual values. Conversely, a gas mixture is "substantially free" of one or more components if it contains less than 5, 1, 0.1 or 0.01% of these components in sum or as individual values. The percentages may refer to molar, quantitative or volumetric proportions.

Oxygen or enriched air injection can minimize size of equipment and capital expenses, if necessary, depending on the balance between operating and capital expenses. For embodiments of the present invention, where a focus is placed on producing a hydrogen product, oxygen may be considered to be the more advantageous oxidant over air, as it minimizes sizing of the downstream separation of the hydrogen, such as pressure swing adsorption, and maximizes the hydrogen recovery therefrom, given higher levels of hydrogen relative to nitrogen.

A level of oxygen enrichment above 21% by volume is or may be used in order to provide stable combustion and oxidation of the ammonia in the furnace zone, and to ensure sufficient temperature to crack or dissociate the ammonia to hydrogen according to embodiments of the present invention. High levels of ammonia oxidation and cracking in the furnace zone, to residual ppmv (parts per million by volume) levels ensures high levels of energy efficiency. Given that the oxidation of ammonia accurs in the first reaction furnace under substoichiometric (or reducing) conditions nitrous oxides formation is avoided (see the results discussed in connection with the Figures below). Control of the excess oxygen is required to balance the potential formation of thermal nitrous oxides and the energy efficiency of the system. Marginally substocihiometric or reducing conditions will minimize thermal nitrous oxides formation, but are advantageously balanced against the energy efficiency, given incomplete combustion of the hydrogen.

Embodiments of the present invention relate to hydrogen production, and the production of heat should be kept to a minimum. That is, combustion, to generate heat and steam, is generally not a focus of the present invention. Any waste heat produced is preferably fully or at least in a large part used to preheat ammonia and oxygen but not for producing steam.

According to the present invention, one or more first transfer line exchangers may be used as, or as a part of, the heat transfer arrangement. The present invention is therefore particularly easily realisable with proven and well-tested equipment used for decades in corresponding circumstances. More generally, a tube bundle may be used for heat transfer according to embodiments of the present invention.

In embodiments of the present invention, the separation process may include at least one of a membrane separation step and an adsorptive separation step, particularly a pressure swing adsorption step. Such methods may particularly be useful to provide an essentially pure hydrogen product.

Pressure swing adsorption, which can be used according to embodiments of the present invention, is based on physical adsorption phenomena, wherein highly volatile compounds with low polarity such as hydrogen or helium are practically impossible to adsorb as compared to molecules such as carbon dioxide, carbon monoxide, nitrogen and hydrocarbons. The latter components can be separated due to their different adsorption forces. Pressure swing adsorption processes operate between two pressure levels. Adsorption takes place at a comparatively high adsorption pressure, during which a gas or gas mixture freed from the adsorbed components is exported from the pressure swing adsorption. This is also referred to as "high pressure flow". Desorption, on the other hand, takes place at a comparatively low desorption pressure, during which a gas or gas mixture referred to here as a "low-pressure stream" can be provided.

Pressure swing adsorption typically employs multiple pressure vessels connected in parallel and filled with an adsorbent. By means of connecting lines and control valves, at least one of the pressure vessels can be flown through at the adsorption pressure with a feed gas, also called "separation feed," and in this way a high-pressure stream can be formed. One or more other pressure vessels are regenerated during this time while maintaining the low-pressure stream. Pressure swing adsorption therefore presents itself externally as a continuous process, while internally it is a discontinuous process consisting of a series of sequences running in parallel.

Membrane separation processes, which can be used additionally or alternatively in embodiments of the present invention, use a membrane, i.e. an element that is more or less selectively permeable to components of a mixture. The membrane forms a selective barrier between two phases, the feed and the permeate. Components with high permeance can pass through the barrier and collect on the permeate side, while the other components with low permeance remain on the feed side of the membrane, also known as the retentate. Membrane separation processes result in a pressure drop across the membrane, so that the permeate is recovered as a low-pressure stream (and is referred to accordingly here), whereas a high-pressure stream is produced on the feed side (and is referred to accordingly here). The terms "high pressure" and "low pressure" are to be understood relative to each other.

Membranes for membrane separation processes can be made of different materials, e.g. polymers and ceramics. Their material, structure and homogeneity determine the properties of the membrane, which are essentially permeability and physical and chemical stability. Membranes used in membrane separation processes may be arranged in a closed unit called a module or cartridge. Such modules can vary widely in shape, packing density, and flow configuration, which all can be used in embodiments of the present invention. The driving force in membrane separation is the partial pressure difference. Since temperature also affects membrane performance, operating pressure and temperature are key factors in membrane operation.

Using a method according to the present invention, ammonia processing for hydrogen generating purposes is becoming particularly advantageous as little or no carbon dioxide or nitrous oxide emissions are formed, providing that the ammonia is produced using hydrocarbons and the carbon dioxide emissions are captured and permanently stored via Carbon Capture and Storage or CCS (known as blue ammonia) or by production through (green) hydrogen produced from electrolysis of water using renewable power (known as green ammonia). In this connection, the purpose of using ammonia is that of providing an advantageous "carrier" for carbon free hydrogen. The present invention is further particularly advantageous as well-tested and proven equipment, i.e., Claus furnaces, which may already be present at production facilities may be used in the context of the present invention.

The level of separation and purification of a hydrogen/nitrogen mixture such as obtained in embodiments of the present invention can be managed by either pressure swing adsorption or membrane separation process depending on the downstream application of the hydrogen. For certain heating pruposes there may be no requirement to purifiy the hydrogen, and the fuel can be used directly. Where the clean hydrogen is e.g. used as feedstock for the synthesis of chemicals, oil refining or steel production, a a large part of the nitrogen is advantageously removed to essentially deliver a high purity hydrogen stream.

For hydrogen mobility, a very high level of purification will generally be advantageous, to remove any residual ammonia (or nitrous oxides) to very low levels. Pure hydrogen as used here may particularly be hydrogen of a purity of more than 95, 99, 99,5, 99,9, 99,99, 99,999 or 99,9999 percent by volume or mass.

In embodiments of the present invention, the process can be operated at high pressure. To avoid high downstream compression costs (after purification through pressure swing adsorption), the ammonia as supplied to the plant as liquid at -33 °C (having been transported by ship as blue/green ammonia from the site or country of production to the site or country of use), can be pumped to high pressure and vaporised against waste heat (as not explicitly illustrated in the Figures). This is similar to partial oxidation of natural gas (POX), wherein the reactors operate at pressures of 40 to 100 bar (gauge). This will require design of the plant as pressure vessels. The pressure of the hydrogen can be maintained for the pressure drop of the plant including the pressure swing adsorption. This will provide a high pressure hydrogen/nitrogen stream for membrane separation (which is advantageously performed) or pressure swing adsorption to deliver high pressure hydrogen which is typically required downstrem. This avoids high cost compression downstream.

In embodiments of the present invention, the one or more ammonia streams and oxygen of the one or more oxygen containing streams may be preheated in the heat recovery arrangement. Such preheating may serve to ultimately increase the furnace temperature in order to fully thermally decompose ammonia therein, wherein a tradeoff can be made between heat (or steam) export and preheating the streams mentioned.

In embodiments of the present invention, water or steam may be used as the heat transfer medium. Such steam may be any of saturated steam, superheated steam, high pressure steam or super high pressure steam, or any combination thereof.

According to some embodiments of the present invention, the one or more burners may include one or more shell-and-tube burners, as generally known for Claus furnaces described before.

In embodiments of the present invention, the temperature suitable to thermally decompose ammonia may be a temperature in a range from 1.000 to 1.500 °C, particularly from 1.200 to 1.400 °C, further particularly from 1.250 to 1.350 °C, yet further particularly about 1.300 °C.

In embodiments of the present invention, an ammonia content is determined in a gas stream downstream of the furnace zone and at least one of an amount of the oxygen of one or more oxygen containing streams may be supplied to the one or more burners and the temperature suitable to thermally decompose ammonia may be adjusted on the basis thereof. A temperature adjustment may likewise include a variation of the oxygen amount, but also a degree of preheating of oxygen and ammonia.

In embodiments of the present invention, the oxygen of the one or more oxygen containing streams is supplied to the one or more burners in a substoichiometric amount. Particularly, the substoichiometric amount may be a less than 50% stoichiometric amount, i.e. only half of the ammonia can be combusted, under idealized conditions. More generally, the substoichiometric amount may also be a less than 100%, 90%, 80%, 70% or 60% stoichiometric amount and may particularly be selected in depencence on the level of oxygen enrichment

In embodiments of the present invention, a high oxygen enrichment may be used, wherein the oxygen is used to ensure minimal sizing of equipment, improved efficiency when operating at high pressure and ease of separation of hydrogen from nitrogen. That is, the one or more oxygen streams supplied to the one or more burners may comprise oxygen in a content of more than 95, 99, 99.5 or 99.9% or may be essentially pure oxygen as mentioned above.

In embodiments of the present invention the separation process is used to form a product essentially consisting of hydrogen, wherein particularly adsorptive processes may be used for particularly high purities. In embodiments of the present invention wherein wherein the gas turbine process is used, the same may be particularly be used to generate electricity and the gas turbine process may be supplied the hydrogen and nitrogen in unseparated form. Again, reference is made to the explanations above.

Ammonia injection via selective catalytic reduction downstream of the furnace zone at the appropriate temperatures can provide a mechanism to reduce any thermal nitrous oxides formation generated under oxidising conditions in the furnace zone, if necessary.

An apparatus for processing ammonia, comprising a furnace arrangement comprising a furnace zone, a heat transfer arrangement arranged downstream of the furnace zone, and a heat recovery arrangement arranged downstream of the heat transfer arrangement may also be part of the present invention.

The apparatus further comprises one or more burners configured to be supplied with ammonia in an ammonia feed amount using one or more ammonia streams, to be supplied with oxygen using one or more oxygen containing streams, to combust a first part of the ammonia feed amount in the furnace zone using the oxygen, to generate a temperature suitable to thermally decompose ammonia in the furnace zone, and to thermally decompose a second part of the ammonia feed amount in the furnace zone to form hydrogen and nitrogen.

The apparatus may further be configured, according to the present invention, to transfer heat, using the heat transfer arrangement, to a heat transfer medium and/or to at least a part of the ammonia and/or at least a part of the oxygen. The term "heat transfer arrangement" shall include any means suitable for transferring heat, whether or not using a heat transfer medium. Particularly at the temperatures mentioned below, such as from 400 to 600 °C, heat may be transferred directly, e.g. in a heat exchanger, to ammonia and/or oxygen without a heat transfer medium., and to subject at least a part of the hydrogen and the nitrogen formed by the thermal decomposition of the second part of the ammonia feed amount to at least one of a separation process and a gas turbine process.

For further features and advantages of such apparatus and embodiments thereof, reference is expressly made to the explanations above concerning the method proposed according to the present invention and its various embodiments, as these explanations apply equally here.

The same also applies to a plant which, according to embodiments of the present invention, may be configured to carry out a method according to any embodiment of the present invention described herein.

### Short description of the Figures

Embodiments of the invention will now be described, by way of example only, with reference to accompanying drawings, in which
Figure 1 illustrates a method according to an embodiment, and
Figures 2 to 8 illustrate experimental data.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to embodiments of the present invention likewise may apply to methods, processes, procedures, etc. according to embodiments of the present invention and vice versa.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future, particularly when encompassed by the scope of the independent claims.

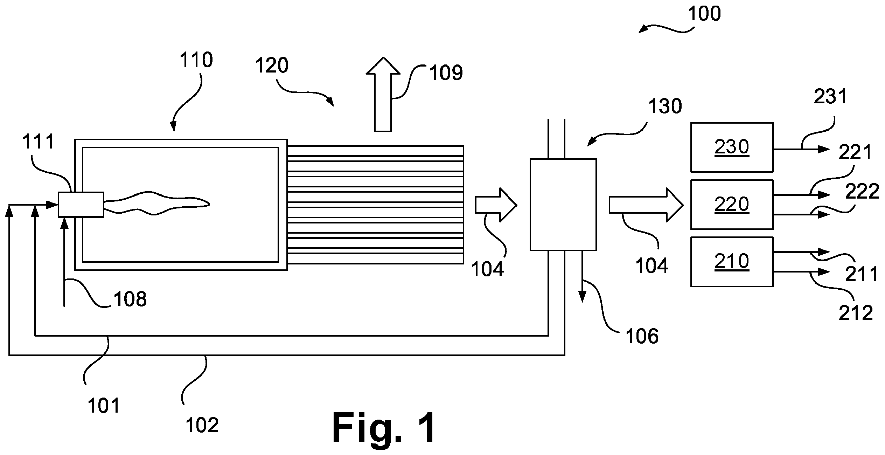

In Figure 1, a method according to an embodiment of the present invention is illustrated by referring to a strongly schematic view of a furnace arrangement 100.

The method illustrated in Figure 1 serves the purpose of processing ammonia to produce heat and at least one further product, such as electricity and/or a product essentially consisting of hydrogen. The furnace arrangement 100 comprises a furnace zone 110, a heat transfer arrangement 120 arranged downstream of the furnace zone 110, and a heat recovery arrangement 130 arranged downstream of the heat transfer arrangement 120. Said elements are not necessarily arranged along a common axis, as illustrated in Figure 1, as long as the heat transfer arrangement 120 is in fluid communication with the furnace zone 110, and the heat recovery arrangement 130 is in fluid communication with the heat transfer arrangement 120, "in fluid communication" particularly meaning that a flue gas or other gas mixture is able to pass to the zone or region mentioned first from the zone or region mentioned last in a corresponding pair. Said elements may be arranged horizontally or vertically or in any other configuration which may be selected as advantageous.

In the example illustrated, a burner 111 is used to combust a first part of an ammonia feed amount provided by an ammonia stream 101 supplied to the burner 111 in the furnace zone 110 using oxygen of an oxygen containing stream 102 supplied to the burner 111 and generating a temperature suitable to thermally decompose ammonia, which is in the range mentioned above. Therefore, a second part of the ammonia feed amount is not combustionally oxidized but thermally decomposed in the furnace zone 110 to form hydrogen and nitrogen. Heated or unheated air is indicated with 108.

Heat is transferred, using the heat transfer arrangement 120, to a heat transfer medium 109, such as water or steam, and at least a part of the hydrogen and the nitrogen formed by the thermal decomposition of the second part of the ammonia feed amount is subjected to at least one of a separation process 210, 220 and a gas turbine process 230, one or more of such processes being present.

The separation process 210, 220 may, as mentioned, include at least one of a membrane separation step and an adsorptive separation step, particularly a pressure swing adsorption step, such that a hydrogen product 211, 221, and a rest gas 212, 222 still including a part of the hydrogen may be produced. In the gas turbine process 230, electricity 231 and a flue gas, which is not specifically indicated, may be formed.

As shown in Figure 1, ammonia of the one or more ammonia streams 101 and oxygen of the one or more oxygen containing streams 102 and air 108 is preheated in the heat recovery arrangement 130 of the furnace arrangement 100. Water or steam may be used as the heat transfer medium 109. The oxygen of the one or more oxygen containing streams 103 and air 108 is supplied to the one or more burners 111 in a substoichiometric amount, in embodiments. A condensate, which may be essentially water, may form in the heat recovery arrangement 130 and may be withdrawn therefrom as a condensate stream 106.

The method provided according to embodiments of the present invention was tested in a Claus burner test facility operated at 4 tons per day of sulphur production under Claus stoichiometry, corresponding to an energy of about 400 kWh. The facility could be operated with streams containing any combination of hydrogen sulphide, ammonia, carbon dioxide, water and hydrocarbons, particularly of the so-called BTX fraction (benzene, toluene and xylenes). The facility could be operated with air, enriched air (at any level) and 100% oxygen (including post combustion). Gas samples were extracted using a water-cooled sample probe at three locations down the length of the furnace and across the furnace. The gas samples were quenched within 3 to 5 ms to avoid reactions taking place during sampling. Thermocouples, infra-red and suction pyrometry were used to accurately measure temperatures.

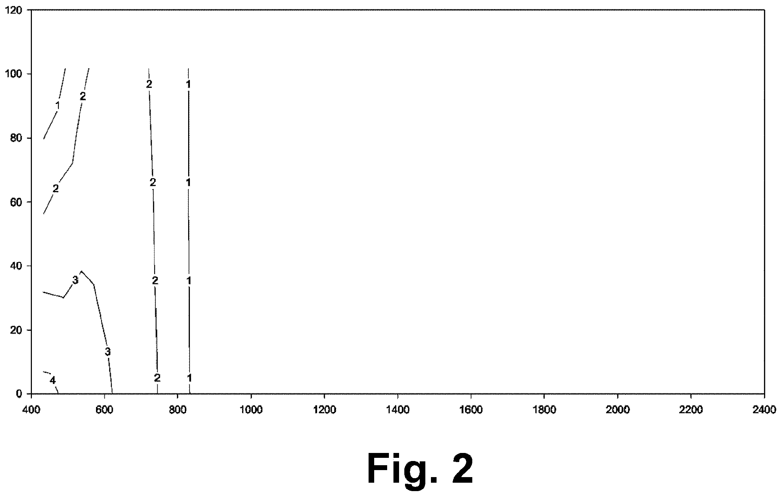

Figure 2 illustrates, in the form of a diagram, results obtained when operating the test facility with 28 vol.-% oxygen enrichment, i.e., ammonia, which was used as the only fuel gas here, was combusted with a stream of air enriched to 28 vol.-% oxygen with a set-up including a single combustion, i.e., a stoichiometric combustion without downstream oxygen addition. As mentioned before, embodiments of the present invention rather include a substoichiometric combustion and the data illustrated in Figure 2 rather illustrate the background of the invention. The oxygen level is not limited to 28% according to embodiments of the invention. For single furnace operation, as proposed according to embodiments of the present invention, oxygen and air may be added to a level to provide a high level of ammonia oxidation and dissociation. Depending on heat loss from the furnace zone and the amount of and oxidant preheat, the level of oxygen enrichment may be determined.

A distance across the furnace in mm is indicated on the vertical axis while a distance down the furnace in mm is indicated on the horizontal axis. Isobaric lines labelled with 1 to 4 indicate levels of residual ammonia in % by volume in the furnace zone.

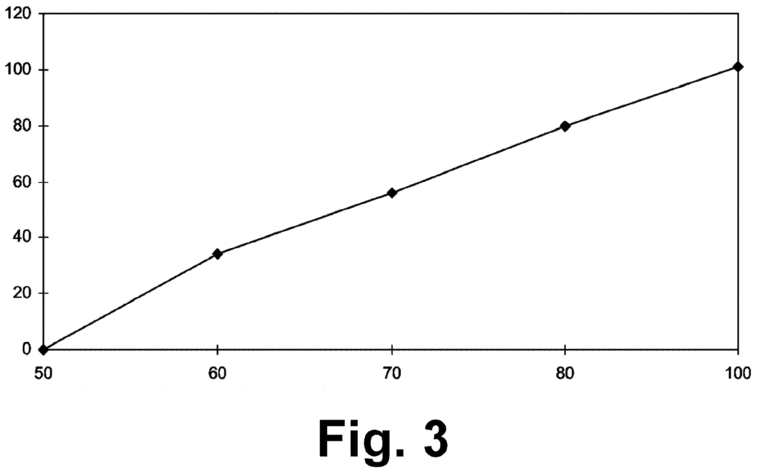

Figure 3 illustrates, in the form of diagram, results obtained when operating the test facility with 28 vol.-% oxygen enrichment. Here, ammonia was used in a concentration indicated as vol.-% on the horizontal axis, the remainder being hydrogen sulphide. It should be noted that, while the results presented here, which are from operating a pilot facility, included hydrogen sulphide, but embodiments of the present invention include an utilization of "clean" ammonia streams without hydrogen sulphide. An ammonia content in a gas leaving the furnace in vol.-ppm is indicated on the vertical axis. The ammonia concentration opposite the burner was determined to be, in this set-up, 2 to 5 vol.-%. The exit concentration from the furnace ranges from 0 to 100 vol.-ppm ammonia depending on the ammonia content in the feed.

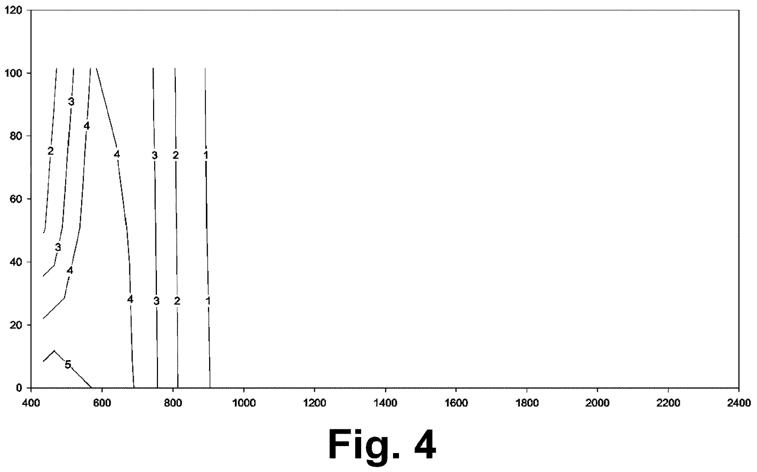

Figure 4 illustrates, in the form of a diagram, results obtained when operating the test facility with 28 vol.-% oxygen enrichment, i.e., ammonia, which was used as the only fuel gas here, was combusted with a stream of air enriched to 28 vol.-% oxygen, essentially as indicated before in connection with Figure 2. Again, a distance across the furnace in mm is indicated on the vertical axis while a distance down the furnace in mm is indicated on the horizontal axis. In contrast to Figure 2, a split flow or double combustion was performed here, where ammonia was combusted with 80% stoichiometry, i.e., less oxygen than required for complete combustion. Uncombusted ammonia was, due to the temperatures prevailing, decomposed to hydrogen and nitrogen and the hydrogen was auto-combusted downstream with a remainder of oxygen, as also not the case according to embodiments of the invention, which rather includes the "first part" of such a set-up only. Therefore, Figure 4 not completely corresponds to embodiments of the present invention. Isobaric lines labelled with 1 to 4 indicate levels of residual ammonia in % by volume in the furnace zone.

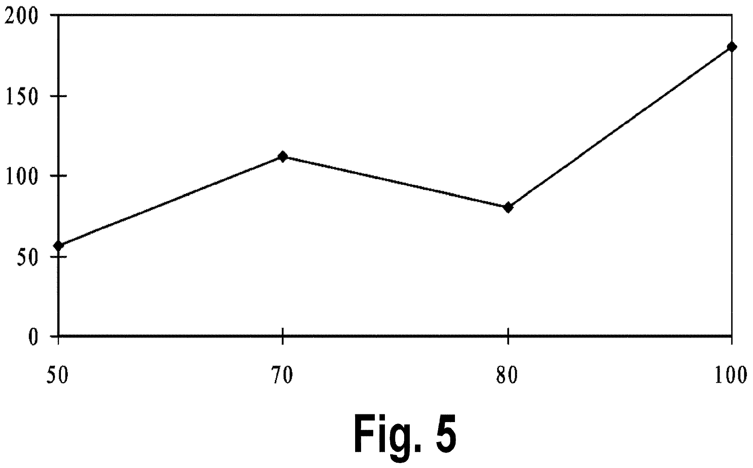

Figure 5 illustrates, in the form of diagram, and similarly to Figure 3, results obtained when operating the test facility with 28 vol.-% oxygen enrichment, but under the conditions just explained in connection with Figure 4, i.e., split-flow or double combustion. 12% of the air was introduced through the burner. Again, ammonia was used in a concentration indicated as vol.-% on the horizontal axis, the remainder being hydrogen sulphide. An ammonia content in a gas leaving the furnace in vol.-ppm is indicated on the vertical axis. Ammonia levels exceed 10 vol.-% opposite the burner in this set-up. The exit concentration from the furnace ranges from 50 to 180 vol.-ppm ammonia depending on the ammonia content in the feed.

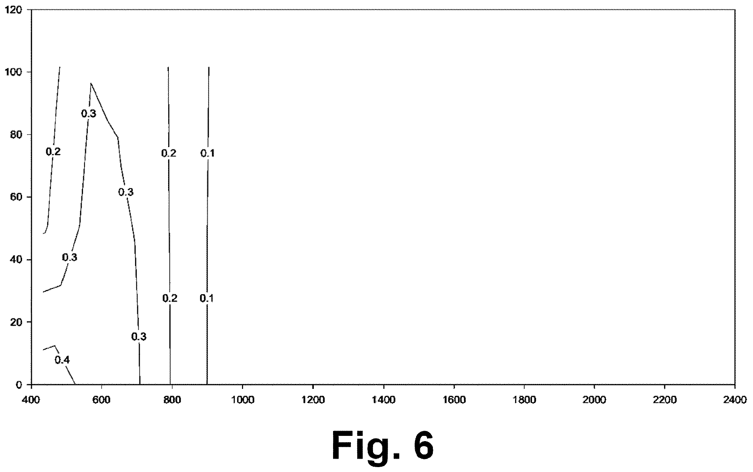

Figure 6 illustrates, in the form of a diagram, results obtained when operating the test facility with 45 vol.-% oxygen enrichment, i.e., ammonia, which was used as the only fuel gas here, was combusted with a stream of air enriched to 45 vol.-% oxygen, with a split-flow or double combustion as indicated before in connection with Figure 4, wherein only 50% of the stoichiometric oxygen was provided to the burner. Again, a distance across the furnace in mm is indicated on the vertical axis while a distance down the furnace in mm is indicated on the horizontal axis. Isobaric lines labelled with 0.1 to 0.4 indicate levels of residual ammonia in % by volume in the furnace zone.

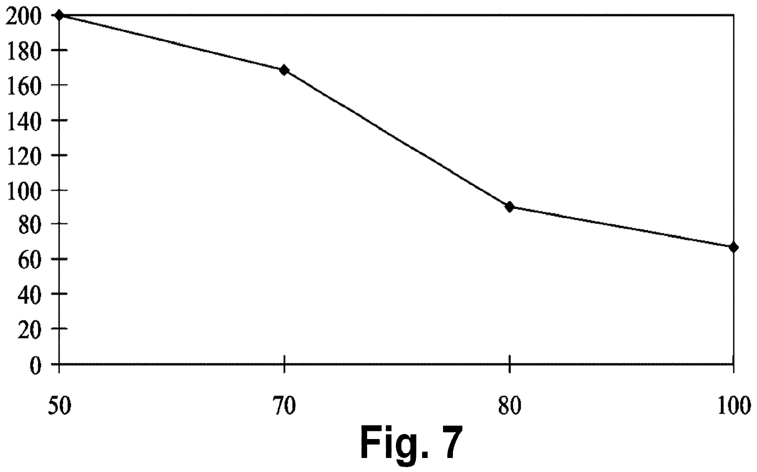

Figure 7 illustrates, in the form of diagram, and similarly to Figure 5, results obtained when operating the test facility under the conditions just explained in connection with Figure 6, i.e., split-flow or double combustion, and 45 vol.-% oxygen enrichment. Again, ammonia was used in a concentration indicated as vol.-% on the horizontal axis, the remainder being hydrogen sulphide. An ammonia content in a gas leaving the furnace in vol.-ppm is indicated on the vertical axis. Herein, the ammonia content opposite the burner could be reduced to about 0.5 vol.-%. The exit concentration from the furnace ranges from 500 to 200 vol.-ppm depending on the ammonia content in the feed.

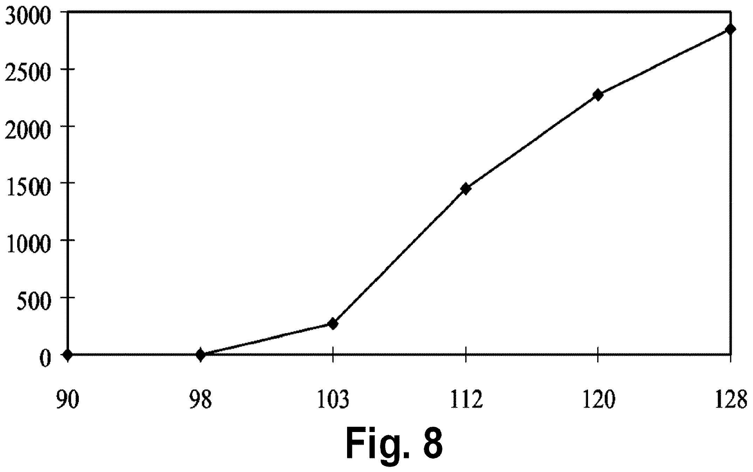

In Figure 8, nitrous oxides formation in dependency of the stoichiometry indicated on the horizontal axis in % is illustrated in the form or a diagram. The nitrous oxides concentration in vol.-ppm is indicated on the vertical axis. In all cases, 100% ammonia was used as a fuel gas. As could be seen, nitrous oxides formation was essentially zero until the stoichiometric oxygen demand exceeds 98%, when the level rapidly increases to several thousand ppm under oxidising conditions. Since 100% ammonia can be burnt successfully with 28% oxygen, it may allow a more flexible process option for treating ammonia streams. A temperature in excess of 1,300 °C (as measured using a ceramic thermocouple) may be required for complete ammonia destruction.

As could be concluded from the experiments, 100% ammonia combustion with air is stable, providing a reaction furnace temperature sufficiently hot. An addition of small quantities of oxygen provides improved stability. Nitrous oxides formation can be avoided when operating under oxygen deficient conditions (i.e. less than 98% stoichiometric conditions). That is, according to embodiments of the present invention, where particularly a sub-stoichiometric oxygen amount is provided, particularly low levels of nitrous oxides are formed. High levels of oxygen enrichment, such as 45%, may be necessary for very rich conditions (i.e., less than 50% stoichiometric conditions). High temperatures of more than 1,300 °C and a certain residence time may be required to avoid any residual ammonia. Given insufficient oxygen, without residual ammonia or formation of nitrous oxides, ammonia will be cracked into hydrogen and nitrogen. More than 50% of the ammonia may be cracked.

Therefore, a combustion technology, as used according to embodiments of the present invention, is suitable and particularly advantageous for generating heat and additionally "cracking" ammonia for forming hydrogen and nitrogen usable in other contexts.

## Claims

1. A method for processing clean ammonia, wherein a furnace arrangement (100) comprising a furnace zone (110), a heat transfer arrangement (120) arranged downstream of the furnace zone (110), and a heat recovery arrangement (130) arranged downstream of the heat transfer arrangement (120) is used, wherein one or more burners (111) are used to combust a first part of an ammonia feed amount provided by one or more ammonia streams (101) supplied to the one or more burners (111) in the furnace zone (110) using oxygen of one or more oxygen containing streams (102) supplied to the one or more burners (111) and generating a temperature suitable to thermally decompose ammonia, wherein a second part of the ammonia feed amount is thermally decomposed in the furnace zone (110) to form hydrogen and nitrogen, wherein heat is transferred, using the heat transfer arrangement (120), to a heat transfer medium (109) and/or to at least a part of the ammonia and/or at least a part of the oxygen, and wherein at least a part of the hydrogen and the nitrogen formed by the thermal decomposition of the second part of the ammonia feed amount is subjected to at least one of a separation process (210, 220) and a gas turbine process (230).

2. The method according to claim 1, wherein one or more first transfer line exchangers are used as, or as a part of, the heat transfer arrangement (130).

3. The method according to claim 1 or 2, wherein the separation process (210, 220) includes at least one of a membrane separation step and/or an adsorptive separation step, particularly a pressure swing adsorption step.

4. The method according to any one of the preceding claims, wherein ammonia of the one or more ammonia streams (101) and oxygen of the one or more oxygen containing streams (102) is preheated in the heat recovery arrangement (130).

5. The method according to any one of the preceding claims, wherein water or steam is used as the heat transfer medium (109).

6. The method according to any one of the preceding claims, wherein the one or more first burners (111) include one or more shell-and-tube burners.

7. The method according to any one of the preceding claims, wherein the temperature suitable to thermally decompose ammonia is a temperature in a temperature range from 1.000 to 1.500 °C, particularly from 1.200 to 1.400 °C, further particularly from 1.250 to 1.350 °C, yet further particularly about 1.300 °C.

8. The method according to any one of the preceding claims, wherein an ammonia content is determined in a gas stream downstream of the furnace zone (110) and wherein at least one of an amount of the oxygen of one or more oxygen containing streams (102) supplied to the one or more burners (111) and the temperature suitable to thermally decompose ammonia is adjusted on the basis thereof.

9. The method according to any one of the preceding claims, wherein the oxygen of the one or more second oxygen containing streams (103) is supplied to the one or more burners (111) in a substoichiometric amount.

10. The method according to claim 9, where the substoichiometric amount is a less than 100% stoichiometric amount, which is particularly selected in depencence on the level of oxygen enrichment.

11. The method according to any of the preceding claims, wherein the one or more oxygen streams (102) supplied to the one or more burners (111) comprise oxygen in a content of more than 95, 99, 99.5 or 99.9%.

12. The method according to any of the preceding claims, wherein the separation process (210, 220) is used to form a product essentially consisting of hydrogen.

13. Apparatus for processing ammonia, comprising a furnace arrangement (100) comprising a furnace zone (110), a heat transfer arrangement (120) arranged downstream of the furnace zone (110), and a heat recovery arrangement (130) arranged downstream of the heat transfer arrangement (120), wherein the apparatus further comprises one or more burners (111) configured to be supplied with ammonia in an ammonia feed amount using one or more ammonia streams (101), to be supplied with oxygen using one or more oxygen containing streams (102), to combust a first part of the ammonia feed amount in the furnace zone (110) using the oxygen, to generate a temperature suitable to thermally decompose ammonia in the furnace zone (110), and to thermally decompose a second part of the ammonia feed amount in the furnace zone (110) to form hydrogen and nitrogen, and wherein the apparatus is further configured to transfer heat, using the heat transfer arrangement (130), to a heat transfer medium (109) and/or to at least a part of the ammonia and/or at least a part of the oxygen, and to subject at least a part of the hydrogen and the nitrogen formed by the thermal decomposition of the second part of the ammonia feed amount to at least one of a separation process (210, 220) and a gas turbine process (230).

14. The apparatus according to claim 13, configured to perform a method according to any one of claims 1 to 12.
